# FASCICULE DE BREVET EUROPEEN

(11) **EP 2 496 465 B1**
(45) Date de publication et mention de la délivrance du brevet: **13.05.2015**
(21) Numéro de dépôt: 10787842.3
(22) Date de dépôt: 22.10.2010
(51) Int. Cl.: B62D 25/12, B62D 65/06, B62D 25/16

(54) **FIXATION D'UNE AILE AVANT AU CHARNON FIXE D'UNE CHARNIERE DU CAPOT D'UN VEHICULE AUTOMOBILE**
BEFESTIGUNG EINES VORDEREN STOSSFÄNGERS AN DIE FIXE PLATTE EINES MOTORHAUBENSCHARNIERS EINES KRAFTFAHRZEUGS
ATTACHMENT OF A FRONT FENDER TO THE FIXED PLATE OF A MOTOR VEHICLE HOOD HINGE

(30) Priorité: 06.11.2009 FR 0957874
(43) Date de publication de la demande: 12.09.2012
(73) Titulaire: PEUGEOT CITROËN AUTOMOBILES SA, 78140 Vélizy Villacoublay (FR)
(72) Inventeur: BILOT, Stéphane, F-78220 Viroflay (FR); BREFORT, Laurent, 78330 Fontenay Le Fleury (FR); DURIMELE, Denis, F-93330 Neuilly Sur Marne (FR)
(74) Mandataire: Fosse, Danièle
(86) Numéro de dépôt international: PCT/FR2010/052275
(87) Numéro de publication internationale: WO 2011/055060

(56) Documents cités:
- EP-A1- 1 398 249
- DE-U1-202008 007 671
- US-A- 4 186 476

## Description

La présente invention concerne une partie avant d'un véhicule automobile comprenant deux ailes fixées à la caisse du véhicule, un capot dont l'arrière est monté-pivotant sur deux charnières dont les charnons fixes sont fixés à la caisse.

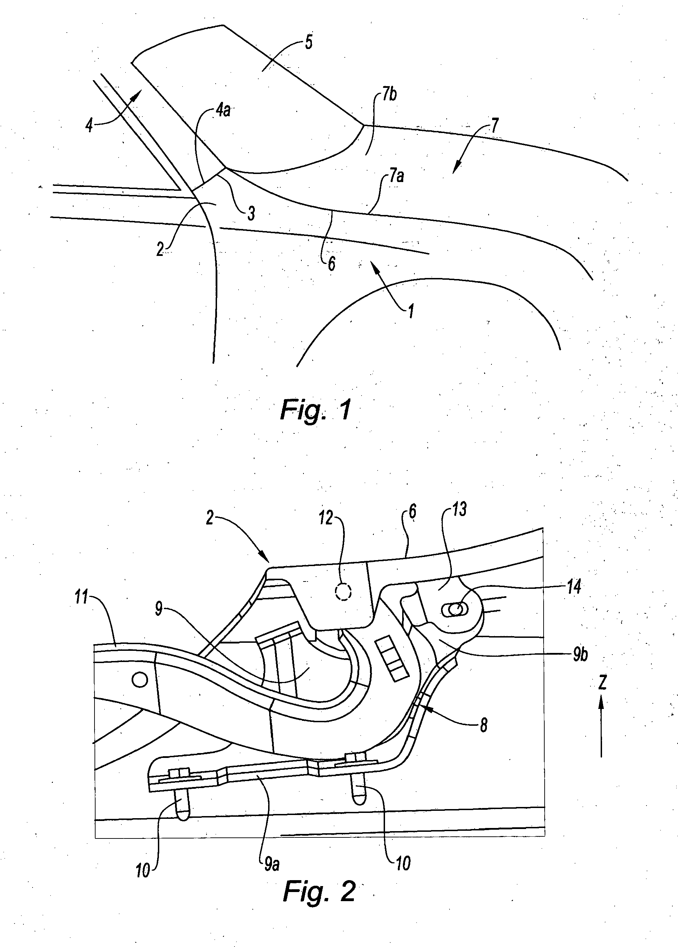

Une telle partie avant de véhicule automobile est représentée sur la figure 1.

Cette figure 1 montre une aile avant 1 dont la partie arrière supérieure 2 comporte un bord 3 adjacent au bord inférieur 4a du montant 4 de la baie du pare-brise 5 et un bord 6 adjacent au bord 7a du capot 7.

L'arrière 7b du capot 7 est monté pivotant sur deux charnières non représentées sur la figure 1.

Dans l'exemple montré sur la figure 1, la partie arrière supérieure 2 de l'aile 1 est une partie qui remonte vers le montant 4 de la baie du pare-brise.

L'expérience montre que cette partie remontante de l'aile 1 est difficile à fixer avec précision à la caisse.

Il faut en effet garantir les prescriptions de qualité au niveau des jeux et affleurements entre les bords adjacents 3 et 4a de l'aile 1 et du montant 4 et entre les bords adjacents 6 et 7a de l'aile 1 et du capot 7.

Pour tenter de résoudre cette difficulté, le brevet FR 2 917 769, qui divulgue le préambule de la revendication 1, propose des supports fixés à la caisse du véhicule permettant de supporter l'aile dans la direction verticale Z du véhicule.

L'un de ces supports est fixé à la caisse à l'aide des vis servant à fixer à la caisse le charnon fixe de l'une des charnières du capot.

Etant donné que la fixation du charnon fixe est indexée par rapport au référentiel du véhicule, la position des supports est définie avec précision.

Cependant, l'aile n'est pas fixée sur ces supports, de sorte que le brevet ci-dessus n'apporte pas une solution satisfaisante au problème évoqué plus haut.

Le but de la présente invention est précisément de résoudre ce problème.

Ce but est atteint, selon l'invention, grâce à une partie avant d'un véhicule automobile comprenant deux ailes fixées à la caisse du véhicule, un capot dont l'arrière est monté pivotant sur deux charnières dont les charnons fixes sont fixés à la caisse, la partie arrière supérieure de chaque aile comportant un bord adjacent au bord inférieur du montant de la baie du pare-brise et un bord adjacent au bord du capot, caractérisée en ce que ladite partie arrière supérieure de chaque aile porte près de son bord adjacent au bord du capot des premiers moyens de liaison qui sont reliés à une partie solidaire du charnon fixe de la charnière du capot adjacente à ladite aile, ces premiers moyens de liaison étant adaptés pour positionner ladite aile suivant l'axe vertical Z du véhicule, de telle sorte que la surface de ladite aile affleure la surface du capot.

Ainsi, l'aile est parfaitement fixée à la caisse grâce à ses premiers moyens de liaison qui la relient au charnon fixe, mais sa position est également parfaitement définie par rapport au référentiel du véhicule, étant donné que cette position est directement liée à celle du charnon fixe qui est elle-même parfaitement définie.

Ladite partie arrière supérieure de chaque aile comprend en outre de seconds moyens de liaison reliés à un organe de fixation sur la caisse, adaptés pour positionner ladite aile suivant l'axe transversal Y du véhicule, ces seconds moyens étant situés près du bord de l'aile adjacent au bord inférieur du montant de la baie du pare-brise.

Ces seconds moyens permettent ainsi de définir avec précision la position de l'aile par rapport à l'axe Y du véhicule.

Dans une version préférée de l'invention, lesdits seconds moyens de liaison sont portés par un raidisseur d'aile fixé sur la face interne de ladite partie arrière supérieure de l'aile.

Ce raidisseur d'aile renforce la partie arrière supérieure de l'aile et en même temps la liaison entre l'aile et ladite partie solidaire du charnon fixe.

Lesdits premiers moyens de liaison peuvent comprendre une patte réalisée sur le bord de l'aile ou du raidisseur comportant un trou de passage d'une vis engagée dans un trou correspondant de ladite partie du charnon fixe.

Dans un premier mode de réalisation, ladite patte fait saillie vers le bas et est reliée à une partie sensiblement verticale solidaire du charnon fixe.

Dans un deuxième mode de réalisation, ladite patte s'étend dans une direction sensiblement horizontale et est reliée à une partie sensiblement horizontale solidaire du charnon fixe.

Dans une version préférée de l'invention, les premiers moyens de liaison portés par l'aile ou le raidisseur d'aile sont directement reliés au charnon fixe.

Cette liaison directe avec le charnon fixe réduit les coûts de fabrication.

Dans une autre version, les premiers moyens de liaison portés par l'aile ou le raidisseur d'aile sont reliés à une partie distincte du charnon fixe, mais fixée à la caisse avec des moyens de fixation communs à ceux du charnon fixe.

Cette partie distincte du charnon fixe est ainsi indexée par rapport à la caisse avec autant de précision que le charnon fixe.

Dans un autre mode de réalisation, la partie du charnon fixe à laquelle sont reliés les moyens de liaison portés par l'aile ou le raidisseur d'aile est la butée du charnon fixe qui coopère avec le charnon mobile de la charnière.

Dans une version particulièrement avantageuse de l'invention, entre la face interne de ladite partie arrière supérieure de l'aile et ledit raidisseur d'aile est située une cale d'épaisseur variable, adaptée pour régler la position de l'aile suivant l'axe Z par rapport à son point de fixation sur ladite partie solidaire du charnon fixe.

De préférence, ladite cale recouvre une ouverture réalisée dans ledit raidisseur d'aile ayant une section légèrement inférieure à celle de ladite cale et étant située au-dessus de la partie supérieure de la charnière.

Grâce à cette disposition la cale joue un rôle de protection vis-à-vis de l'aile, lors du montage du capot sur la caisse.

D'autres particularités et avantages de l'invention apparaîtront encore tout au long de la description ci-après.

Aux dessins annexés, donnés à titre d'exemples, non limitatifs :
- la figure 2 est une vue de la face intérieure de la partie arrière supérieure d'une aile montrant la fixation de celle-ci suivant l'axe Z, au charnon fixe de l'une des charnières du capot, non représenté,
- la figure 3 est une vue montrant la fixation de l'aile sur la caisse suivant l'axe Y dans la zone montant de baie,
- la figure 4 est une vue du dessus de l'aile montrant une fixation de l'aile au charnon fixe analogue à celle de la figure 2,
- la figure 5 est une vue analogue à la figure 4 montrant un autre mode de fixation de l'aile au charnon fixe,
- la figure 6 est une vue en perspective d'un raidisseur d'aile,
- la figure 7 est une vue en perspective montrant le raidisseur d'aile de la figure 6 en position sous la partie supérieure arrière de l'aile,
- la figure 8 est une vue analogue à la figure 6 montrant un autre mode de réalisation du raidisseur d'aile,
- la figure 9 est une vue analogue aux figures 6 et 8 montrant un troisième mode de réalisation du raidisseur d'aile,
- la figure 10 est une vue en perspective d'une aile portant le raidisseur d'aile de la figure 9 fixée à une partie du charnon fixe,
- les figures 11 et 12 sont des vues en perspective illustrant deux autres modes de liaison entre l'aile et le charnon fixe,
- la figure 13 est une vue en coupe transversale suivant un plan vertical passant par l'axe Y de l'aile portant un raidisseur d'aile montrant une cale de réglage et de protection disposée entre l'aile et le raidisseur, ainsi que la charnière du capot disposée sous l'aile.

La figure 2 montre la face intérieure de la partie supérieure arrière 2 de l'aile représentée sur la figure 1 ainsi que la charnière 8 adjacente du capot 7 non représenté.

La charnière 8 comprend un charnon fixe 9 dont l'embase 9a ést destinée à être fixée à la caisse du véhicule au moyen de deux vis 10.

La partie supérieure du charnon fixe 9 est reliée par un axe d'articulation 12 à un charnon mobile 11 destiné à être fixé au capot.

Comme montré par la figure 2, la partie 2 de l'aile recouvre le charnon fixe 9 et partiellement le charnon mobile 11.

Conformément à l'invention, la partie 2 de l'aile porte près de son bord supérieur 6 destiné à être aligné avec le bord latéral 7a du capot 7, représenté sur la figure 1, des premiers moyens de liaison 13 qui sont reliés à une partie 9b solidaire du charnon fixe 9 de la charnière 8 du capot adjacente à la partie 2 de l'aile.

Ces premiers moyens de liaison 13 sont adaptés pour positionner la partie 2 de l'aile suivant l'axe vertical Z du véhicule, de telle sorte que la surface de cette partie 2 dé l'aile affleuré la surface adjacente du capot.

Dans l'exemple montré sur la figure 2, les moyens de liaison 13 sont constitués par une patte repliée vers le bas qui est fixée à une partie verticale 9b du charnon fixe 9 au moyen d'une vis 14.

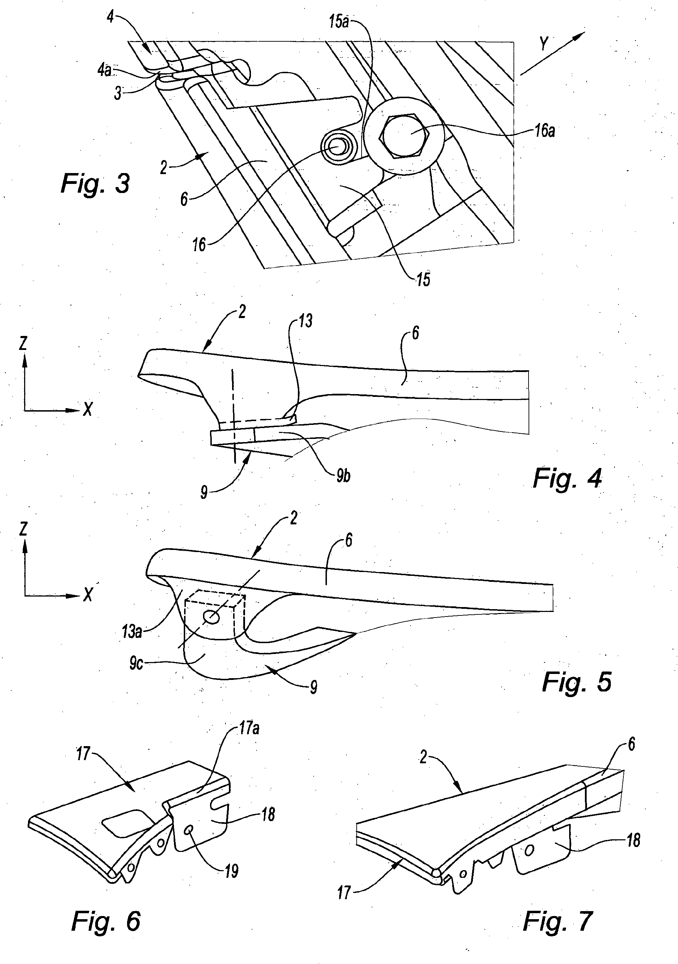

La figure 3 montre que la partie arrière supérieure 2 de l'aile comprend en outre de seconds moyens de liaison 15 reliés à un organe de fixation 16 sur la caisse, adaptés pour positionner la partie 2 de l'aile suivant l'axe transversal Y du véhicule.

Ces seconds moyens de liaison 15 sont situés près du bord 3 de l'aile adjacent au bord inférieur 4a du montant 4 de la baie du pare-brise.

Dans l'exemple illustré par la figure 3, les moyens de liaison 15 sont constitués par une patte reliée au bord supérieur 6 de la partie 2 de l'aile dirigée vers l'intérieur du véhicule, portant une encoche 15a destinée à être engagée sur une vis dont l'écrou 16a est visible sur la figure 3.

La figure 4 est une vue de dessus de la partie 2 de l'aile montrant la patte 13 repliée vers le bas c'est-à-dire dans la direction de l'axe Z du véhicule, fixée à une partie verticale 9b du charnon fixe 9.

La figure 5 est une vue analogue à la figure 4, dans laquelle la partie 2 de l'aile porte près de son bord 6, une patte horizontale 13a fixée sur une partie repliée 9c également horizontale du charnon fixe 9 qui assure un appui suivant l'axe Z.

La figure 6 représente un raidisseur d'aile 17 destiné à être fixé sous la partie 2 de l'aile de façon à être en contact avec la face intérieure de celle-ci, comme montré par la figure 7.

Dans l'exemple des figures 6 et 7, les moyens de liaison entre la partie 2 de l'aile et le charnon fixe comprennent une patte 18 réalisée sur le bord 17a du raidisseur 17 comportant un trou 19 pour le passage d'une vis destinée à être engagée dans un trou correspondant de la partie 9b du charnon fixe 9 représentée sur la figure 2.

Dans cet exemple, la patte 18 fait saillie vers le bas et est destinée à être reliée à une partie 9b sensiblement verticale solidaire du charnon fixe 9.

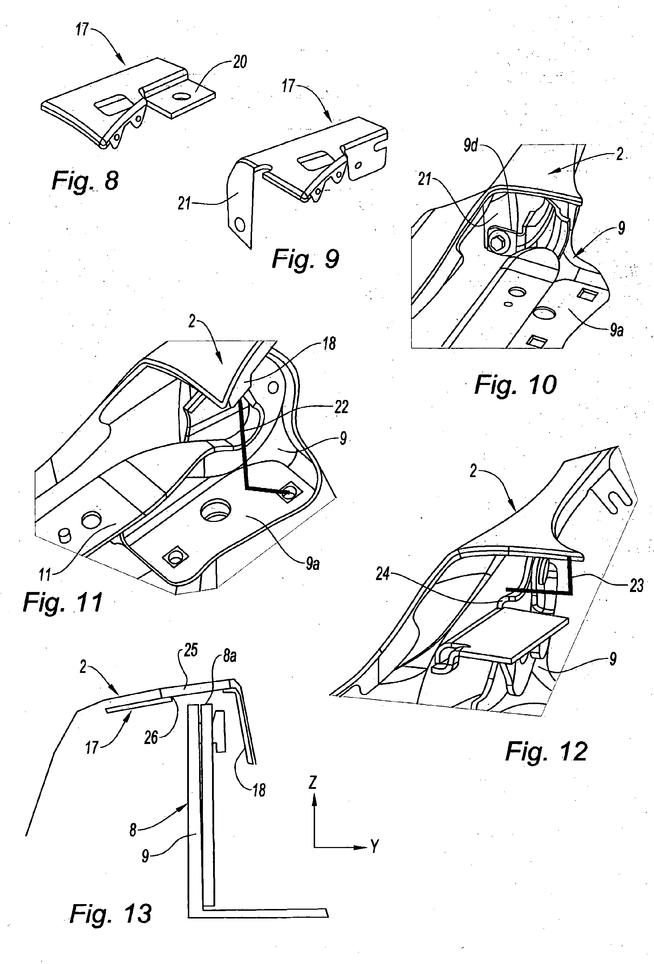

Dans l'exemple de la figure 8, le raidisseur d'aile 17 porte une patte 20 qui s'étend dans une direction sensiblement horizontale et qui est destinée à être reliée à une partie sensiblement horizontale solidaire du charnon fixe 9.

Dans l'exemple illustré par les figures 9 et 10, le raidisseur d'aile 17 porte une patte 21 repliée vers le bas dont la surface est perpendiculaire à l'axe X du véhicule.

La figure 10 montre que la patte 21 du raidisseur d'aile 17 est fixée à une partie repliée 9d du charnon fixe 9.

Dans les exemples illustrés par les figures 2, 4, 5, 10 la partie 2 de l'aile comporte des moyens de liaison qui sont directement reliés à une partie du charnon fixe 9.

Cependant, l'invention s'applique également aux cas dans lesquels l'aile est liée à une partie distincte du charnon fixe 9; mais fixée à la caisse avec des moyens de fixation communs à ceux du charnon fixe 9.

Ainsi, la figure 11 montre schématiquement une équerre 22 reliant la patte 18 du raidisseur d'aile 17 ou une patte directement découpée sur le bord de la partie 2 de l'aile à l'embase 9a du charnon fixe et qui est fixée sur cette embase 9a ou sous celle-ci par au moins une vis de fixation commune avec celle assurant la fixation de l'embase 9a sur la caisse du véhicule.

De cette façon, l'équerre 22 est indexée sur la caisse avec la même précision que le charnon fixe 9.

La figure 12 montre une équerre 23 qui relie une patte 18 du raidisseur 17 ou de la partie 2 de l'aile avec une partie fixe du charnon fixe 9.

Il s'agit ici de la butée 24 du charnon fixe 9 sur laquelle peut s'appuyer une butée du charnon mobile 11 lorsque le capot est ouvert.

Dans le mode de réalisation illustré par la figure 13, entre la face interne de la partie arrière supérieure 2 de l'aile et le raidisseur d'aile 17 est située une cale 25 d'épaisseur variable adaptée pour régler la position de l'aile suivant l'axe Z par rapport à son point de fixation sur la partie solidaire du charnon fixe 9.

Cette cale 25 permet ainsi de compenser d'éventuelles dispersions de fabrication et d'affiner la position de l'aile suivant l'axe Z.

Par ailleurs, la cale 25 recouvre une ouverture 26 réalisée dans le raidisseur d'aile 17 ayant une section légèrement inférieure à celle de la cale 25.

L'ouverture 26 est située au droit de la partie supérieure 8a de la charnière 8.

La cale 25 permet de protéger l'aile contre les risques de frottement ou de choc de la partie supérieure 8a de la charnière lors du montage du capot prééquipé de ses charnières 8.

Les principaux avantages de l'invention que l'on vient de décrire sont les suivants.

L'invention permet de garantir la position de l'aile vis-à-vis de ses interfaces avec le montant de la baie du pare-brise et le capot.

Elle permet en particulier de réduire la chaîne de cotes entre les différentes pièces à assembler et d'atteindre des objectifs très serrés sur le plan des affleurements de l'aile avec les éléments adjacents de la carrosserie.

De plus, l'invention permet d'éviter l'utilisation de gabarits pour positionner les différentes pièces entre elles, ce qui conduit à un gain de temps de montage.

## Revendications

1. Partie avant d'un véhicule automobile comprenant deux ailes (1) fixées à la caisse du véhicule, un capot (7) dont l'arrière est monté pivotant sur deux charnières (8) dont les charnons fixes (9) sont fixés à la caisse, la partie arrière supérieure (2) de chaque aile (1) comportant un bord (3) adjacent au bord inférieur (4a) du montant (4) de la baie du pare-brise (5) et un bord adjacent (6) au bord (7a) du capot (7), **caractérisée en ce que** ladite partie arrière supérieure (2) de chaque aile (1) porte près de son bord (6) adjacent au bord (7a) du capot (7) des premiers moyens de liaison (13) qui sont reliés à une partie (9b) solidaire du charnon fixe (9) de la charnière du capot adjacente à ladite aile (1), ces premiers moyens de liaison étant adaptés pour positionner ladite aile (1) suivant l'axe vertical Z du véhicule, de telle sorte que la surface de ladite aile (1) affleure la surface du capot (7) et **en ce que**
ladite partie arrière supérieure (2) de chaque aile comprend en outre de seconds moyens de liaison (15) reliés à un organe de fixation sur la caisse adaptés pour positionner ladite aile (1) suivant l'axe transversal Y du véhicule, ces seconds moyens (15) étant situés près du bord (3) de l'aile (1) adjacent au bord inférieur (4a) du montant (4) de la baie du pare-brise.

2. Partie avant d'un véhicule automobile selon la revendication 1, **caractérisée en ce que** lesdits premiers moyens de liaison sont portés par un raidisseur d'aile (17) fixé sur la face interne de ladite partie arrière supérieure (2) de l'aile.

3. Partie avant d'un véhicule automobile selon l'une des revendications 1 et 2, **caractérisée en ce que** lesdits premiers moyens de liaison (13) comprennent une patte (13, 13a, 18, 20, 21) réalisée sur le bord de l'aile (1) ou du raidisseur (17) comportant un trou de passage (19) d'une vis engagée dans un trou correspondant de ladite partie du charnon fixe (9).

4. Partie avant d'un véhicule automobile selon la revendication 3, **caractérisée en ce que** ladite patte (13, 18) fait saillie vers le bas et est reliée à une partie (9b) sensiblement verticale solidaire du charnon fixe.

5. Partie avant d'un véhicule automobile selon la revendication 3, **caractérisée en ce que** ladite patte (13a, 20) s'étend dans une direction sensiblement horizontale et est reliée à une partie sensiblement horizontale (9c) solidaire du charnon fixe (9).

6. Partie avant d'un véhicule automobile selon l'une des revendications 1 à 5, **caractérisée en ce que** lesdits premiers moyens de liaison (13, 13a, 18, 21) sont directement reliés au charnon fixe (9).

7. Partie avant d'un véhicule automobile selon l'une des revendications 1 à 5, **caractérisée en ce que** lesdits premiers moyens de liaison sont reliés à une partie (22) distincte du charnon fixe (9), mais fixée à la caisse avec des moyens de fixation communs à ceux du charnon fixe (9).

8. Partie avant d'un véhicule automobile selon l'une des revendications 1 à 5, **caractérisée en ce que** ladite partie du charnon fixe (9) est la butée (24) du charnon fixe (9).

9. Partie avant d'un véhicule automobile selon l'une des revendications 2 à 8, **caractérisée en ce qu'**entre la face interne de ladite partie arrière supérieure (2) de l'aile et ledit raidisseur d'aile (17) est située une cale (25) d'épaisseur variable, adaptée pour régler la position de l'aile suivant l'axe Z par rapport à son point de fixation sur ladite partie solidaire du charnon fixe (9).

10. Partie avant d'un véhicule automobile selon la revendication 9, **caractérisée en ce que** ladite cale (25) recouvre une ouverture (26) réalisée dans ledit raidisseur d'aile (17) ayant une section légèrement inférieure à celle de ladite cale (25) et étant située au-dessus de la partie supérieure (8a) de la charnière (8).

## Patentansprüche

1. Vorderteil eines Kraftfahrzeugs, der zwei Flügel (1) umfasst, die an der Karosserie des Fahrzeugs befestigt sind, eine Haube (7), deren Rückseite schwenkend auf zwei Scharnieren (8) montiert ist, deren stationäre Scharnierbeschläge (9) an der Karosserie befestigt sind, wobei der hintere obere Teil (2) I des Flügels (1) einen Rand (3) benachbart zu dem unteren Rand (4a) des Ständers (4) der Windschutzscheibenöffnung (5) und einen Rand (6) benachbart zu dem Rand (7a) der Haube (7) umfasst, **dadurch gekennzeichnet, dass** der hintere obere Teil (2) jedes Flügels (1) nahe seinem Rand (6), benachbart zu dem Rand (7a) der Haube (7) erste Verbindungsmittel (13) trägt, die mit einem Teil (9b), die fest mit dem stationären Scharnierbeschlag (9) des Scharniers der zu dem Flügel (1) benachbarten Haube verbunden sind, wobei diese ersten Verbindungsmittel angepasst sind, um den Flügel (1) entlang der vertikalen Z-Achse des Fahrzeugs derart zu positionieren, dass die Oberfläche des Flügels (1) mit der Oberfläche der Haube (7) bündig ist, und dass,
der hintere obere Teil (2) jedes Flügels außerdem zweite Verbindungsmittel (15) umfasst, die mit einem Befestigungsorgan auf der Karosserie verbunden sind, die geeignet sind, um den Flügel (1) entlang der Y-Querachse des Fahrzeugs zu positionieren, wobei diese zweiten Mittel (15) nahe dem Rand (3) des Flügels (1), benachbart zu dem unteren Rand (4a) des Ständers (4) der Windschutzscheibenöffnung liegen.

2. Vorderer Teil eines Kraftfahrzeugs nach Anspruch 1, **dadurch gekennzeichnet, dass** die ersten Verbindungsmittel von einem Flügelversteifer (17), der auf der internen Seite des hinteren oberen Teils (2) des Flügels befestigt ist, getragen werden.

3. Vorderer Teil eines Kraftfahrzeugs nach einem der Ansprüche 1 und 2, **dadurch gekennzeichnet, dass** die ersten Verbindungsmittel (13) eine Pratze (13, 13a, 18, 20, 21) umfassen, die auf dem Rand des Flügels (1) oder des Versteifers (17) hergestellt ist, die eine Durchgangsöffnung (19) einer Schraube umfasst, die in eine entsprechende Öffnung des Teils des stationären Scharnierbeschläge (9) eingefügt ist.

4. Vorderer Teil eines Kraftfahrzeugs nach Anspruch 3, **dadurch gekennzeichnet, dass** die Pratze (13, 18) nach unten vorsteht und mit einem im Wesentlichen vertikalen Teil (9b), der mit dem stationären Scharnierbeschlag fest verbunden ist, verbunden ist.

5. Vorderer Teil eines Kraftfahrzeugs nach Anspruch 3, **dadurch gekennzeichnet, dass** sich die Pratze (13a, 20) in eine im Wesentlichen horizontale Richtung erstreckt und mit einem im Wesentlichen horizontalen Teil (9c), der fest mit dem stationären Scharnierbeschlag (9) verbunden ist, verbunden ist.

6. Vorderer Teil eines Kraftfahrzeugs nach einem der Ansprüche 1 bis 5, **dadurch gekennzeichnet, dass** die ersten Verbindungsmittel (13, 13a, 18, 20, 21) direkt mit dem stationären Scharnierbeschlag (9) verbunden sind.

7. Vorderer Teil eines Kraftfahrzeugs nach einem der Ansprüche 1 bis 5, **dadurch gekennzeichnet, dass** die ersten Befestigungsmittel mit einem getrennten Teil (22) des stationären Scharnierbeschlags (9) verbunden aber an der Karosserie mit Befestigungsmitteln befestigt sind, die mit denen des stationären Scharnierbeschlags (9) gemeinsam sind.

8. Vorderer Teil eines Kraftfahrzeugs nach einem der Ansprüche 1 bis 5, **dadurch gekennzeichnet, dass** der Teil des stationären Scharnierbeschlags (9) der Anschlag (24) des stationären Scharnierbeschlags (9) ist.

9. Vorderer Teil eines Kraftfahrzeugs nach einem der Ansprüche 2 bis 8, **dadurch gekennzeichnet, dass** sich zwischen der internen Seite des hinteren oberen Teils (2) des Flügels und der Flügelversteifung (17) ein Keil (25) mit variabler Stärke befindet, der angepasst ist, um die Position des Flügels entlang der Z-Achse in Bezug auf seinen Befestigungspunkt auf dem Teil, der fest mit dem stationären Scharnierbeschlag (9) verbunden ist, einzustellen.

10. Vorderer Teil eines Kraftfahrzeugs nach Anspruch 9, **dadurch gekennzeichnet, dass** der Keil (25) eine Öffnung (26) abdeckt, die in dem Flügelversteifer (17) hergestellt ist, die einen Querschnitt hat, der etwas kleiner ist als der des Keils (25) und sich oberhalb des oberen Teils (8a) des Scharniers (8) befindet.

## Claims

1. A front portion of a motor vehicle including two fenders (1) attached to the vehicle body, a hood (7) that is pivotally mounted at the rear to two hinges (8), the fixed plates (9) of which are attached to the body, the upper rear portion (2) of each fender (1) comprising an edge (3) that is adjacent to the bottom edge (4a) of the strut (4) for the windshield opening (5) and an edge that it adjacent (6) to the edge (7a) of the hood (7), **characterized in that** said upper rear portion (2) of each fender (1) carries first connection means (13) near the edge (6) thereof that is adjacent to the edge (7a) of the hood (7), said first connection means being connected to a portion (9b) that is rigidly connected to the fixed plate (9) of the hood hinge that is adjacent to said fender (1), these first connection means being arranged so as to position said fender (1) along the vertical axis Z of the vehicle, such that the surface of said fender (1) is flush with the surface of the hood (7) and **in that**
said upper rear portion (2) of each fender further includes second connection means (15) connected to a fixing member on the body arranged so as to position said fender (1) along the transverse axis Y of the vehicle, these second means (15) being situated close to the edge (3) of the fender (1) adjacent to the bottom edge (4a) of the strut (4) for the windshield opening.

2. The front portion of a motor vehicle according to claim 1, **characterized in that** said first connection means are carried by a fender stiffener (17) fixed on the internal face of said upper rear portion (2) of the fender.

3. The front portion of a motor vehicle according to one of claims 1 and 2, **characterized in that** said first connection means (13) include a lug (13, 13a, 18, 20, 21) realized on the edge of the fender (1) or of the stiffener (17) comprising a hole (19) for the passage of a screw engaged in a corresponding hole of said portion of the fixed plate (9).

4. The front portion of a motor vehicle according to claim 3, **characterized in that** said lug (13, 18) projects downward and is connected to a substantially vertical portion (9b) that is rigidly connected to the fixed plate.

5. The front portion of a motor vehicle according to claim 3, **characterized in that** said lug (13a, 20) extends in a substantially horizontal direction and is connected to a substantially horizontal portion (9c) that is rigidly connected to the fixed plate (9).

6. The front portion of a motor vehicle according to one of claims 1 to 5, **characterized in that** said first connection means (13, 13a, 18, 20, 21) are directly connected to the fixed plate (9).

7. The front portion of a motor vehicle according to one of claims 1 to 5, **characterized in that** said first connection means are connected to a distinct portion (22) with respect to the fixed plate (9), but fixed to the body with fixing means common to those of the fixed plate (9).

8. The front portion of a motor vehicle according to one of claims 1 to 5, **characterized in that** said portion of the fixed plate (9) is the stop (24) of the fixed plate (9).

9. The front portion of a motor vehicle according to one of claims 2 to 8, **characterized in that** between the internal face of said upper rear portion (2) of the fender and said fender stiffener (17) there is situated a spacer (25) of variable thickness, arranged to adjust the position of the fender along the axis Z with respect to its attachment point on said portion that is rigidly connected to the fixed plate (9).

10. The front portion of a motor vehicle according to claim 9, **characterized in that** said spacer (25) covers an opening (26) realized in said fender stiffener (17) having a section slightly less than that of said spacer (25) and being situated above the upper portion (8a) of the hinge (8).
